# EUROPEAN PATENT APPLICATION

(11) **EP 4 542 364 A1**
(43) Date of publication of application: **23.04.2025**
(21) Application number: 23842138.2
(22) Date of filing: 07.07.2023
(51) Int. Cl.: G06F 3/06, G06F 13/16

(54) **METHOD, APPARATUS, AND SYSTEM FOR SHARING MEMORY DEVICE**

(30) Priority: 19.07.2022 CN 202210849179
(71) Applicant: Huawei Technologies Co., Ltd., Shenzhen, Guangdong 518129 (CN)
(72) Inventor: LEI, Hubao, Shenzhen, Guangdong 518129 (CN); BAO, Yunbing, Shenzhen, Guangdong 518129 (CN); CHEN, Zhuowei, Shenzhen, Guangdong 518129 (CN)
(74) Representative: Pfenning, Meinig & Partner mbB
(86) International application number: PCT/CN2023/106221
(87) International publication number: WO 2024/017073

(57) **Abstract**

This application discloses a storage device sharing method and apparatus, and a system. The storage device sharing method is applied to a multi-integrated-module system. The system includes a plurality of integrated modules, a management unit, and a storage device. The plurality of integrated modules are separately connected to the management unit. The management unit is connected to the storage device. The method includes: The management unit receives one or more read/write requests that are for a plurality of pieces of target data and sent by the plurality of integrated modules, determining a plurality of target addresses corresponding to the plurality of pieces of target data, determining a plurality of physical addresses in the storage device based on the plurality of target addresses, and reading or writing the plurality of pieces of target data in the storage device based on the plurality of physical addresses. In the method, the target address of the target data is mapped to the physical address in the storage device in an address remapping manner, so that the plurality of integrated modules can share one storage device, and a quantity of storage devices can be reduced in a multi-integrated-module scenario, thereby reducing costs.

## Description

This application claims priority to Chinese Patent Application No. 202210849179.2, filed with the China National Intellectual Property Administration on July 19, 2022 and entitled "STORAGE DEVICE SHARING METHOD AND APPARATUS, AND SYSTEM", which is incorporated herein by reference in its entirety.

### TECHNICAL FIELD

This application relates to the storage field, and in particular, to a storage device sharing method and apparatus, and a system.

### BACKGROUND

Currently, with the rapid development of a chip process, more integrated modules may be integrated in a system. Generally, each integrated module is connected to a corresponding storage device. The storage device is configured to store data such as a configuration file and firmware of the integrated module connected to the storage device. As a quantity of the integrated modules in the system increases, a quantity of the storage devices also increases. An increase in the quantity of the storage devices further causes an increase in production costs.

As a result, how to reduce the quantity of the storage devices in a multi-integrated-module scenario is a problem that needs to be solved.

### SUMMARY

Embodiments of this application provide a storage device sharing method and apparatus, and a system, so that in a multi-integrated-module scenario, a plurality of integrated modules can share one storage device via a management unit in an address remapping manner, and a quantity of storage devices connected to the integrated modules can be reduced, thereby reducing costs.

According to a first aspect, this application provides a multi-integrated-module system. The multi-integrated-module system includes a plurality of integrated modules, a management unit, and a storage device. The plurality of integrated modules are separately connected to the management unit. The management unit is connected to the storage device. During specific implementation, when the plurality of integrated modules have a low requirement on a startup speed, the plurality of integrated modules may be separately connected to the management unit through low-speed interfaces such as serial peripheral interfaces (serial peripheral interfaces, SPIs) and inter-integrated circuits (inter-integrated circuits, I2Cs). When the plurality of integrated modules have a high requirement on a startup speed, the plurality of integrated modules may be separately connected to the management unit through high-speed interfaces such as parallel interfaces. The storage device may be connected to the management unit through an SPI or an I2C. Alternatively, the storage device may be directly integrated into the management unit. In this case, the management unit and the storage device may be connected without an interface.

During specific implementation, each of the plurality of integrated modules may be a device implemented as an application-specific integrated circuit (application-specific integrated circuit, ASIC), a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof.

During specific implementation, the management unit may be any component having a management feature, such as a complex programmable logic device (complex programmable logic device, CPLD), a baseboard management controller (baseboard management controller, BMC), or a microcontroller unit (microcontroller unit, MCU).

During specific implementation, the storage device may be a volatile storage medium, or may be a non-volatile storage medium, for example, a flash (flash), a programmable read-only memory (programmable read-only memory, PROM), an electrically alterable read-only memory (electrically alterable read-only memory, EAROM), or an erasable programmable read-only memory (erasable programmable read-only memory, EPROM).

In a specific implementation of the first aspect, the plurality of integrated modules are configured to send one or more read/write requests for a plurality of pieces of target data, where the plurality of integrated modules are in one-to-one correspondence with the plurality of pieces of target data. The management unit is configured to: connect to the storage device, and separately connect to the plurality of integrated modules, and configured to: receive the read/write requests that are for the plurality of pieces of target data and sent by the plurality of integrated modules, determine a plurality of target addresses corresponding to the plurality of pieces of target data, where the plurality of pieces of target data are in one-to-one correspondence with the plurality of target addresses, determine a plurality of physical addresses in the storage device based on the plurality of target addresses, where the plurality of target addresses are in one-to-one correspondence with the plurality of physical addresses, and read or write the plurality of pieces of target data in the storage device based on the plurality of physical addresses. The storage device is configured to store or write the plurality of pieces of target data.

In a possible implementation of the first aspect, before that the management unit is configured to receive the read/write requests that are for the plurality of pieces of target data and sent by the plurality of integrated modules, the management unit is configured to perform power-on reset on the plurality of integrated modules. The management unit may simultaneously perform power-on reset on the plurality of integrated modules, may sequentially perform power-on reset on each integrated module, or may sequentially perform power-on reset on some integrated modules in the plurality of integrated modules.

In a possible implementation of the first aspect, the management unit is configured to: receive the read/write requests that are for the plurality of pieces of target data and sent by the plurality of integrated modules, and determine, based on the read/write requests for the plurality of pieces of target data, the plurality of target addresses corresponding to the plurality of pieces of target data, where each of the plurality of pieces of target data may be a configuration file of the integrated module, firmware data of the integrated module, or the like.

The management unit is configured to determine, based on the plurality of pieces of target data, the plurality of target addresses corresponding to the plurality of pieces of target data. The target address of each piece of target data in the plurality of target addresses may include a starting address of the target data and a length of the target data, or include a starting address, an ending address, and the like of the target data.

In a possible implementation of the first aspect, the management unit is configured to determine the plurality of physical addresses in the storage device based on the plurality of target addresses. The physical address may include a physical starting address of the target data and the length of the target data, or include a physical starting address, a physical ending address, and the like of the target data. The management unit is configured to determine the plurality of physical addresses in the storage device based on the plurality of target addresses and a mapping table. The mapping table includes a mapping relationship between a data address corresponding to each of the plurality of integrated modules and the physical address in the storage device.

In a specific implementation of the first aspect, the management unit is configured to receive a read request that is for a first piece of target data and sent by a first integrated module and a write request that is for a second piece of target data and sent by a second integrated module. The management unit is configured to determine, based on the first piece of target data, a first target address corresponding to the first piece of target data. The first target address includes a starting address 0 of the first piece of target data and a length 60 of the first piece of target data. Then, the management unit is configured to determine a first physical address in the storage device based on the first target address and the mapping table. The management unit is configured to determine, based on the starting address of the first piece of target data and the mapping table, that a physical starting address of the first piece of target data in the storage device is 0, and the length 60 of the first piece of target data remains unchanged, and obtain the first physical address. Then, the management unit is configured to determine, based on the second piece of target data, a second target address corresponding to the second piece of target data. The second target address includes a starting address 0 of the second piece of target data and a length 30 of the second piece of target data. Then, the management unit is configured to determine a second physical address in the storage device based on the second target address and the mapping table. The management unit is configured to determine, based on the starting address of the second piece of target data and the mapping table, that a physical starting address of the second piece of target data in the storage device is 100, and the length 60 of the second piece of target data remains unchanged, and determine the second physical address.

The management unit is configured to read the plurality of pieces of target data from the storage device based on the plurality of physical addresses.

In a possible implementation of the first aspect, when the management unit sequentially receives the read requests that are for the plurality of pieces of target data and sent by the plurality of integrated modules, the management unit sequentially determines the plurality of corresponding target addresses based on the plurality of pieces of target data, and determines the plurality of physical addresses in the plurality of storage devices based on the plurality of target addresses. The management unit reads one piece of corresponding target data in the storage device based on one of the plurality of physical addresses, and sends the target data to the corresponding integrated module. Then, the management unit continuously repeats the foregoing steps to complete reading of the plurality of pieces of target data. A specific process is not described in detail in this application.

In another possible implementation of the first aspect, when the management unit simultaneously receives the read requests that are for the plurality of pieces of target data and sent by the plurality of integrated modules, the management unit buffers the plurality of pieces of target data read from the storage device into a buffer, and then sends the plurality of pieces of target data in parallel to the corresponding integrated modules through corresponding integrated module interfaces. For example, the management unit simultaneously receives the read request that is for the first piece of target data and sent by the first integrated module and a read request that is for the second piece of target data and sent by the second integrated module. The management unit reads the first piece of target data from the storage device based on the first physical address corresponding to the first piece of target data, and buffers the first piece of target data into the buffer. Then, the management unit reads the second piece of target data from the storage device based on the second physical address corresponding to the second piece of target data, and buffers the second piece of target data into the buffer. Then, the management unit sends the first piece of target data to the first integrated module through a first integrated module interface. Simultaneously, the management unit sends the second piece of target data to the second integrated module through a second integrated module interface.

The management unit is configured to write the plurality of pieces of target data into the storage device based on the plurality of physical addresses.

In a possible implementation of the first aspect, when the management unit sequentially receives the write requests that are for the plurality of pieces of target data and sent by the plurality of integrated modules, the management unit is configured to: sequentially determine the plurality of corresponding target addresses based on the plurality of pieces of target data, and determine the plurality of physical addresses in the plurality of storage devices based on the plurality of target addresses. The management unit sequentially writes, based on the plurality of physical addresses, the plurality of target addresses into the corresponding physical addresses in the storage device.

In another possible implementation of the first aspect, when the management unit simultaneously receives the write requests that are for the plurality of pieces of the target data and sent by the plurality of integrated modules, the management unit is configured to buffer the plurality of pieces of target data into the buffer, sequentially obtain one piece of target data in the buffer, and write the target data into the corresponding physical address of the storage device. The management unit is configured to continuously repeat the foregoing process, and write the plurality of pieces of target data into the storage device.

Currently, in a typical multi-integrated-module system, each integrated module is connected to a corresponding storage device. The storage device is configured to store data such as a configuration file and firmware of the integrated module. A plurality of integrated modules do not need to share the storage device, and a conflict of concurrent reading or writing of the plurality of integrated modules does not occur. A management unit in the system is also connected to a corresponding storage device. The storage device is configured to store information such as firmware and logs of the management unit. As a quantity of integrated modules integrated in the system increases, a quantity of storage devices in the system increases. This causes an increase in an area of a printed circuit board (printed circuit board, PCB) and an increase in costs.

In conclusion, in the multi-integrated-module system provided in the first aspect, the management unit may enable, in an address remapping manner, the plurality of integrated modules to share one storage device. In the system, there is no need to connect a corresponding storage device to each integrated module, so that a quantity of storage devices can be greatly reduced in a multi-integrated-module scenario, and costs can be reduced. In addition, the plurality of integrated modules share one storage device, so that when a plurality of storage devices exist, a problem of poor normalization caused by different specifications of the plurality of storage devices can be avoided.

According to a second aspect, this application provides a storage device sharing method. The method includes: A management unit receives one or more read/write requests that are for a plurality of pieces of target data and sent by a plurality of integrated modules, and determines a plurality of target addresses corresponding to the plurality of pieces of target data, where the plurality of integrated modules are in one-to-one correspondence with the read/write requests for the plurality of pieces of the target data, and the plurality of pieces of target data are in one-to-one correspondence with the plurality of target addresses. The management unit determines a plurality of physical addresses in a storage device based on the plurality of target addresses, where the plurality of target addresses are in one-to-one correspondence with the plurality of physical addresses. The management unit reads or writes the plurality of pieces of target data in the storage device based on the plurality of physical addresses.

In a possible implementation of the second aspect, before that a management unit receives one or more read/write requests that are for a plurality of pieces of target data and sent by a plurality of integrated modules, the management unit performs power-on reset on the plurality of integrated modules through an I/O interface.

In a possible implementation of the second aspect, the management unit determines, based on the read/write requests for the plurality of pieces of target data, the plurality of target addresses corresponding to the plurality of pieces of target data, where each of the plurality of pieces of target data may be a configuration file of the integrated module, firmware data of the integrated module, or the like. The management unit determines, based on the plurality of pieces of target data, the plurality of target addresses corresponding to the plurality of pieces of target data. The target address of each piece of target data in the plurality of target addresses may include a starting address of the target data and a length of the target data, or include a starting address, an ending address, and the like of the target data.

In a possible implementation of the second aspect, the management unit may perform address remapping, and determine the plurality of physical addresses in the storage device based on the plurality of target addresses. The physical addresses may include a physical starting address of the target data and the length of the target data, or include a physical starting address, a physical ending address, and the like of the target data. This is not specifically limited herein. For example, the management unit determines the physical starting addresses of the plurality of pieces of target data in the storage device based on the starting addresses of the target data in the plurality of pieces of target addresses, and because lengths of the plurality of pieces of target data remain unchanged, the plurality of physical addresses can be determined.

The management unit reads the plurality of pieces of target data from the storage device based on the plurality of physical addresses.

In a possible implementation of the second aspect, when the management unit sequentially receives the read requests that are for the plurality of pieces of target data and sent by the plurality of integrated modules, the management unit sequentially reads the plurality of pieces of target data from the storage device based on the plurality of physical addresses, and sequentially sends the plurality of pieces of target data to the plurality of corresponding integrated modules.

In another possible implementation of the second aspect, when the management unit simultaneously receives the write requests that are for the plurality of pieces of target data and sent by the plurality of integrated modules, the management unit reads the plurality of pieces of target data from the storage device based on the plurality of physical addresses, buffers the plurality of pieces of target data into a buffer, and sends the plurality of pieces of target data in parallel to the plurality of corresponding integrated modules.

The management unit writes the plurality of pieces of target data into the storage device based on the plurality of physical addresses.

In a possible implementation of the second aspect, when the management unit sequentially receives the write requests that are for the plurality of pieces of target data and sent by the plurality of integrated modules, the management unit sequentially writes the plurality of pieces of target data into the storage device based on the plurality of physical addresses.

In another possible implementation of the second aspect, when the management unit simultaneously receives the write requests that are for the plurality of pieces of target data and sent by the plurality of integrated modules, the management unit buffers the plurality of pieces of target data into the buffer, sequentially obtains one piece of target data in the buffer, and writes the target data into the corresponding physical address of the storage device. The management unit continuously repeats the foregoing process, and writes the plurality of pieces of target data into the storage device.

According to the storage device sharing method provided in the second aspect, in a multi-integrated-module scenario, the management unit receives the read/write requests that are for the plurality of pieces of target data and sent by the plurality of integrated modules, and maps the target addresses of the plurality of pieces of target data to the plurality of different physical addresses in one storage device, to implement address remapping of the target data and implement sharing of one storage device by the plurality of integrated modules.

In conclusion, according to the storage device sharing method provided in this application, in the multi-integrated-module scenario, the plurality of integrated modules can perform read or write operations on the plurality of pieces of target data in one storage device connected to the management unit, so that a quantity of storage devices can be greatly reduced in the multi-integrated-module scenario, and costs can be reduced.

According to a third aspect, an embodiment of this application provides a storage device sharing apparatus. The storage device sharing apparatus includes: an integrated module interface controller, configured to receive one or more read/write requests that are for a plurality of pieces of target data and sent by a plurality of integrated modules, and determine a plurality of target addresses corresponding to the plurality of pieces of target data, where the plurality of integrated modules are in one-to-one correspondence with the read/write requests for the plurality of pieces of target data, and the plurality of pieces of target data are in one-to-one correspondence with the plurality of target addresses; a controller module, configured to determine a plurality of physical addresses in a storage device based on the plurality of target addresses, where the plurality of target addresses are in one-to-one correspondence with the plurality of physical addresses; a storage device interface controller, configured to read or write the plurality of pieces of target data in the storage device based on the plurality of physical addresses; an I/O controller module, configured to perform power-on reset on the plurality of integrated modules; a buffer module, configured to buffer the plurality of pieces of target data; and a routing module, configured to establish a plurality of communication connections between the plurality of integrated modules and the storage device that corresponds to a management unit, where the plurality of integrated modules are in one-to-one correspondence with the plurality of communication connections.

A plurality of integrated module interface controllers are configured to connect to the plurality of integrated modules. Each integrated module interface controller is configured to connect to the routing module and the controller module. The storage device interface controller is configured to connect to the storage device, and is connected to the routing module and the controller module. The controller module is configured to connect to all devices in the apparatus, and is configured to control working of all devices in the apparatus.

In conclusion, according to the storage device sharing apparatus provided in this application, the integrated module interface controller, the controller module, the storage device interface controller, the I/O controller module, the routing module, and the buffer module cooperate with each other to receive, in a multi-integrated-module scenario, access requests that are for the plurality of pieces of target data and sent by the plurality of integrated modules, and map the target addresses of the plurality of pieces of target data to the different physical addresses of one storage device, to implement address remapping of the target data and implement sharing the storage device by the plurality of integrated modules, so that a quantity of storage devices in the multi-integrated-module scenario can be reduced, thereby reducing costs.

This application may further provide more implementations through combination based on the implementations provided in the foregoing aspects.

### BRIEF DESCRIPTION OF DRAWINGS

To describe the technical solutions in embodiments of this application more clearly, the following briefly introduces the accompanying drawings for describing embodiments.
FIG. 1 is a schematic diagram of a structure of a typical multi-integrated-module system according to an embodiment of this application;
FIG. 2 is a schematic diagram of a circuit of a single integrated module according to an embodiment of this application;
FIG. 3 is a schematic diagram of a structure of a multi-integrated-module system according to an embodiment of this application;
FIG. 4 is a schematic diagram of a circuit of typical firmware upgrade of a single integrated module according to an embodiment of this application;
FIG. 5 is a flowchart of a storage device sharing method according to an embodiment of this application; and
FIG. 6 is a schematic diagram of a structure of a storage device sharing apparatus according to an embodiment of this application.

### DESCRIPTION OF EMBODIMENTS

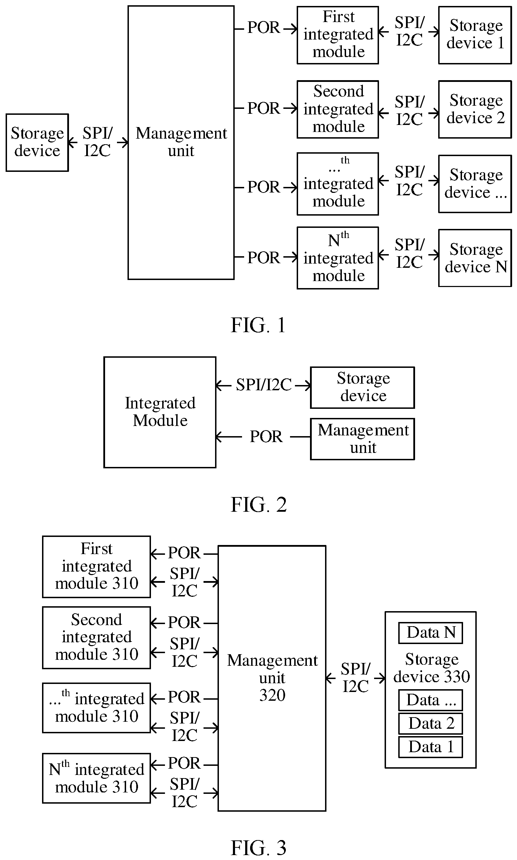

FIG. 1 is a schematic diagram of a structure of a typical multi-integrated-module system according to this application. The typical multi-integrated-module system includes a plurality of integrated modules, a management unit, and a plurality of storage devices. Each of the plurality of integrated modules is connected to a corresponding storage device. The plurality of integrated modules are separately connected to the management unit. The management unit is connected to the storage device. The storage device connected to the integrated module is configured to store data such as a configuration file and firmware of the corresponding integrated module. The storage device connected to the management unit is configured to store data such as a configuration file and firmware of the management unit. In the typical multi-integrated-module system, a schematic diagram of a circuit of a single integrated module is shown in FIG. 2. The integrated module is connected to the corresponding storage device through a serial peripheral interface (serial peripheral interface, SPI) or a two-wire serial bus (inter-integrated circuit, I2C), and is further connected to a power-on reset (power-on reset, POR) module of a single-chip microcomputer. Actually, the integrated module is connected to the management unit. The management unit performs power-on reset on the integrated module. Optionally, the integrated module may also be connected to the corresponding storage device through an improved inter-integrated circuit (improved inter-integrated circuit, I3C).

The POR module is configured to control power-on or reset of the single-chip microcomputer or the integrated module by the management unit. For example, the POR module may be implemented as a general-purpose input/output (general-purpose input/output, GPIO). In this case, the management unit supports a GPIO signal, so that the management unit controls a status of a device (for example, a peripheral) in the entire system. For example, the GPIO signal may be independent of or in combination with another signal (for example, a touch signal of a power button on a panel of the entire system) to generate a power supply/reset control signal.

It should be noted that, in addition to the connection between the management unit and the single-chip microcomputer, the POR module may be further configured to connect the management unit to another device.

With the development of a chip process, a quantity of integrated modules in the typical multi-integrated-module system increases. Because the integrated module has the correspondingly connected storage device, a quantity of storage devices in the typical multi-integrated-module system also increases. This further increases an area of a printed circuit board (printed circuit board, PCB) and production costs.

Therefore, to resolve the foregoing problem, this application provides a multi-integrated-module system. FIG. 3 is a schematic diagram of a structure of a multi-integrated-module system according to this application. The multi-integrated-module system includes a plurality of integrated modules 310, a management unit 320, and a storage device 330. The plurality of integrated modules 310 are separately connected to the management unit 320. The management unit 320 is connected to the storage device 330. During specific implementation, when the plurality of integrated modules 310 have a low requirement on a startup speed, the plurality of integrated modules 310 may be separately connected to the management unit 320 through low-speed interfaces such as serial peripheral interfaces (serial peripheral interfaces, SPIs) or inter-integrated circuits (inter-integrated circuits, I2Cs). When the plurality of integrated modules 310 have a high requirement on a startup speed, the plurality of integrated modules 310 may be separately connected to the management unit 320 through high-speed interfaces such as parallel interfaces. This is not specifically limited herein. The storage device 330 may be connected to the management unit 320 through an SPI or an I2C. Alternatively, the storage device 330 may be directly integrated into the management unit 320. In this case, the management unit 320 and the storage device 330 may be connected without an interface.

During specific implementation, each of the plurality of integrated modules 310 may be a device implemented as an application-specific integrated circuit (application-specific integrated circuit, ASIC), a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof.

During specific implementation, the management unit 320 may be any component having a management feature, such as a complex programmable logic device (complex programmable logic device, CPLD), a baseboard management controller (baseboard management controller, BMC), or a microcontroller unit (microcontroller unit, MCU).

During specific implementation, the storage device 330 may be a volatile storage medium, or may be a non-volatile storage medium, for example, a flash (flash), a programmable read-only memory (programmable read-only memory, PROM), an electrically alterable read-only memory (electrically alterable read-only memory, EAROM), or an erasable programmable read-only memory (erasable programmable read-only memory, EPROM).

In a specific implementation, when the management unit 320 is implemented by the BMC, the BMC supports two SPIs. SPI 0 is a serial peripheral interface flash controller (serial peripheral interface flash controller, SFC) interface, and is mainly configured to upgrade mainboard firmware such as a basic input output system (basic input output system, BIOS) and a flash (Flash). A BMC security core outputs one GPIO used for upgrade and switch (SWITCH) control. Signal descriptions are shown in Table 1.

**Table 1 SPI signal description**

| Signal name | I/ O | Electrica 1 level | Description |
|---|---|---|---|
| SPIO CLK | O | 3.3 V | SPI clock |
| SPI0_CS0_N | O | 3.3 V | SPI chip selection |
| SPI0_MOSI | O | 3.3 V | SPI data signal, host output/slave input |
| SPI0_MISO | I | 3.3 V | SPI data signal, slave output/host input |
| GPIO_UPDATE_BIOS_E N | O | 3.3 V | A GPIO output by a security core is used for upgrade and SWITCH control. |

In a specific implementation, when the integrated module is connected to the corresponding storage device through the I2C, for example, the system supports 10 I2C interfaces in total, and is configured to communicate with a mainboard through an intelligent platform management interface (Intelligent Platform Management Interface, IPMI), and implement functions such as peripheral management. For signal descriptions, refer to Table 2.

**Table 2 I2C signal description**

| Signal name | I/O | Electrical level | Description |
|---|---|---|---|
| I2C[0:9]_SCL | O | 3.3 V | I2C interface clock |
| I2C[0:9]_SDA | I/O | 3.3 V | I2C interface data |

In a specific implementation, the plurality of integrated modules 310 are configured to send one or more read/write requests for a plurality of pieces of target data, where the plurality of integrated modules are in one-to-one correspondence with the plurality of pieces of target data. The management unit 320 is configured to: connect to the storage device, and separately connect to the plurality of integrated modules, and configured to: receive the read/write requests that are for the plurality of pieces of target data and sent by the plurality of integrated modules, determine a plurality of target addresses corresponding to the plurality of pieces of target data, where the plurality of pieces of target data are in one-to-one correspondence with the plurality of target addresses, determine a plurality of physical addresses in the storage device based on the plurality of target addresses, where the plurality of target addresses are in one-to-one correspondence with the plurality of physical addresses, and read or write the plurality of pieces of target data in the storage device based on the plurality of physical addresses. The storage device 330 is configured to store or write the plurality of pieces of target data.

In a possible implementation, before that the management unit is configured to receive the read/write requests that are for the plurality of pieces of target data and sent by the plurality of integrated modules, the management unit is configured to perform power-on reset on the plurality of integrated modules. The management unit may simultaneously perform power-on reset on the plurality of integrated modules, may sequentially perform power-on reset on each integrated module, or may sequentially perform power-on reset on some integrated modules in the plurality of integrated modules. This is not specifically limited herein.

In a possible implementation, the management unit is configured to: receive the read/write requests that are for the plurality of pieces of target data and sent by the plurality of integrated modules, and determine, based on the read/write requests for the plurality of pieces of target data, the plurality of target addresses corresponding to the plurality of pieces of target data, where each of the plurality of pieces of target data may be a configuration file of the integrated module, firmware data of the integrated module, or the like. This is not specifically limited herein.

The management unit is configured to determine, based on the plurality of pieces of target data, the plurality of target addresses corresponding to the plurality of pieces of target data. The target address of each piece of target data in the plurality of target addresses may include a starting address of the target data and a length of the target data, or include a starting address, an ending address, and the like of the target data. This is not specifically limited herein.

In a possible implementation, the management unit is configured to determine the plurality of physical addresses in the storage device based on the plurality of target addresses. The physical address may include a physical starting address of the target data and the length of the target data, or include a physical starting address, a physical ending address, and the like of the target data. This is not specifically limited herein. The management unit is configured to determine the plurality of physical addresses in the storage device based on the plurality of target addresses and a mapping table. The mapping table includes a mapping relationship between a data address corresponding to each of the plurality of integrated modules and the physical address in the storage device.

In a specific implementation, the management unit is configured to receive a read request that is for a first piece of target data and sent by a first integrated module and a write request that is for a second piece of target data and sent by a second integrated module. The management unit is configured to determine, based on the first piece of target data, a first target address corresponding to the first piece of target data. The first target address includes a starting address 0 of the first piece of target data and a length 60 of the first piece of target data. Then, the management unit is configured to determine a first physical address in the storage device based on the first target address and the mapping table. The management unit is configured to determine, based on the starting address of the first piece of target data and the mapping table, that a physical starting address of the first piece of target data in the storage device is 0, and the length 60 of the first piece of target data remains unchanged, and obtain the first physical address. Then, the management unit is configured to determine, based on the second piece of target data, a second target address corresponding to the second piece of target data. The second target address includes a starting address 0 of the second piece of target data and a length 30 of the second piece of target data. Then, the management unit is configured to determine a second physical address in the storage device based on the second target address and the mapping table. The management unit is configured to determine, based on the starting address of the second piece of target data and the mapping table, that a physical starting address of the second piece of target data in the storage device is 100, and the length 60 of the second piece of target data remains unchanged, and determine the second physical address.

The management unit is configured to read the plurality of pieces of target data from the storage device based on the plurality of physical addresses.

In a possible implementation, when the management unit sequentially receives the read requests that are for the plurality of pieces of target data and sent by the plurality of integrated modules, the management unit sequentially determines the plurality of corresponding target addresses based on the plurality of pieces of target data, and determines the plurality of physical addresses in the plurality of storage devices based on the plurality of target addresses. The management unit reads one piece of corresponding target data in the storage device based on one of the plurality of physical addresses, and sends the target data to the corresponding integrated module. Then, the management unit continuously repeats the foregoing steps to complete reading of the plurality of pieces of target data. A specific process is not described in detail in this application.

In another possible implementation, when the management unit simultaneously receives the read requests that are for the plurality of pieces of target data and sent by the plurality of integrated modules, the management unit buffers the plurality of pieces of target data read from the storage device into a buffer, and then sends the plurality of pieces of target data in parallel to the corresponding integrated modules through corresponding integrated module interfaces. For example, the management unit simultaneously receives the read request that is for the first piece of target data and sent by the first integrated module and a read request that is for the second piece of target data and sent by the second integrated module. The management unit reads the first piece of target data from the storage device based on the first physical address corresponding to the first piece of target data, and buffers the first piece of target data into the buffer. Then, the management unit reads the second piece of target data from the storage device based on the second physical address corresponding to the second piece of target data, and buffers the second piece of target data into the buffer. Then, the management unit sends the first piece of target data to the first integrated module through a first integrated module interface. Simultaneously, the management unit sends the second piece of target data to the second integrated module through a second integrated module interface.

The management unit is configured to write the plurality of pieces of target data into the storage device based on the plurality of physical addresses.

In a possible implementation, when the management unit sequentially receives the write requests that are for the plurality of pieces of target data and sent by the plurality of integrated modules, the management unit is configured to: sequentially determine the plurality of corresponding target addresses based on the plurality of pieces of target data, and determine the plurality of physical addresses in the plurality of storage devices based on the plurality of target addresses. The management unit sequentially writes, based on the plurality of physical addresses, the plurality of target addresses into the corresponding physical addresses in the storage device.

In another possible implementation, when the management unit simultaneously receives the write requests that are for the plurality of pieces of the target data and sent by the plurality of integrated modules, the management unit is configured to buffer the plurality of pieces of target data into the buffer, sequentially obtain one piece of target data in the buffer, and write the target data into the corresponding physical address of the storage device. The management unit is configured to continuously repeat the foregoing process, and write the plurality of pieces of target data into the storage device.

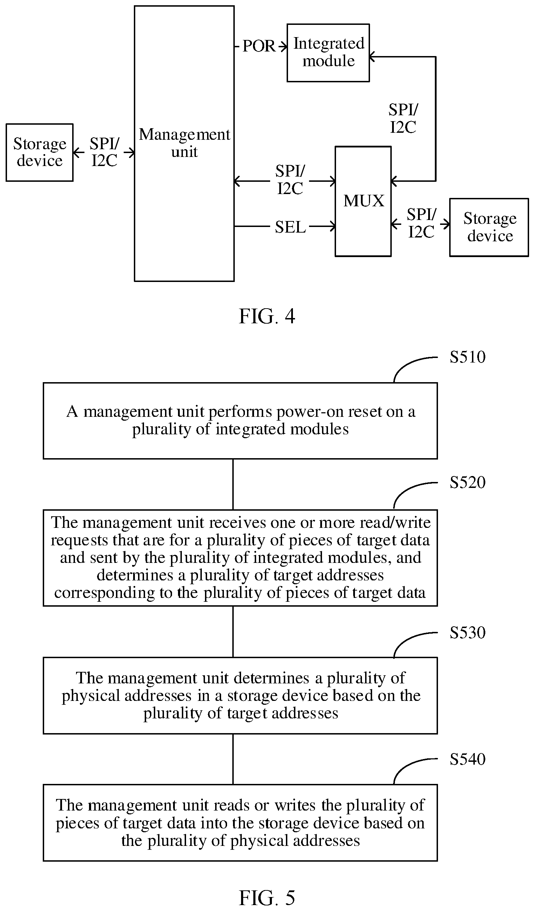

In a specific implementation, in the typical multi-integrated-module system shown in FIG. 1, because each integrated module has the storage device connected to the integrated module, the management unit cannot directly communicate with the plurality of storage devices connected to the plurality of integrated modules. When the integrated module performs firmware upgrade, a multiplexer needs to be added between the integrated module and the storage device connected to the integrated module. Specifically, FIG. 4 is a schematic diagram of a circuit of typical firmware upgrade of a single integrated module according to this application. In FIG. 4, the storage device corresponding to the management unit is connected to the management unit. The management unit is connected to a multiplexer (multiplexer, MUX). The multiplexer is separately connected to the integrated module and the storage device corresponding to the integrated module. The management unit controls the multiplexer by using a selection control signal SEL, and determines that a main line of the storage device corresponding to the integrated module is connected to the management unit or connected to the integrated module. When the main line of the storage device configured for the integrated module is connected to the management unit, the management unit writes firmware data newly upgraded by the integrated module into the storage device configured for the integrated module, to complete the firmware upgrade of the integrated module. In the typical multi-integrated-module system, to implement firmware upgrade of the plurality of integrated modules, a plurality of circuits shown in FIG. 4 need to be designed. This firmware upgrade solution of adding the multiplexer to the circuit is too complex. Therefore, according to the system shown in FIG. 3, this application provides a new implementation of the firmware upgrade of the integrated module. A specific process of the new implementation is as follows.

In a specific implementation, the storage device connected to the management unit stores firmware data of the plurality of integrated modules. When the first integrated module needs to upgrade the firmware data, the management unit is configured to: obtain a write request for the firmware data of the first integrated module and newly upgraded first firmware data, determine a first target address of the first firmware data, and determine a first physical address in the storage device based on the first target address. The management unit is first configured to erase corresponding original firmware data in the storage device based on the first physical address, then write the newly upgraded first firmware data into the first physical address of the storage device. The management unit is configured to send, to the first integrated module, an instruction instructing that firmware is successfully upgraded. In this application, the firmware upgrade of the plurality of integrated modules is implemented by repeating the foregoing steps. A specific process is not described herein.

In the foregoing implementation, because the plurality of integrated modules in the system share the storage device connected to the management unit, and the storage device stores the firmware data of the plurality of integrated modules, the management unit is configured to erase the original firmware data of the integrated module from the storage device connected to the management unit, and write the corresponding newly upgraded firmware data. The firmware upgrade can be implemented without adding the multiplexer in the system, so that a firmware upgrade process can be simplified and firmware upgrade efficiency can be improved.

In conclusion, in the multi-integrated-module system provided in this application, the management unit may enable, in an address remapping manner, the plurality of integrated modules to share one storage device. In the system, there is no need to connect a corresponding storage device to each integrated module, so that a quantity of storage devices can be greatly reduced in a multi-integrated-module scenario, and costs can be reduced. In addition, the plurality of integrated modules share one storage device, so that when a plurality of storage devices exist, a problem of poor normalization caused by different specifications of the plurality of storage devices can be avoided.

The following describes a storage device sharing method according to this application with reference to the accompanying drawings. FIG. 5 is a flowchart of a storage device sharing method according to an embodiment of this application. The method includes the following steps S510 to S540.

S510: A management unit performs power-on reset on a plurality of integrated modules.

The management unit is connected to the plurality of integrated modules through an I/O interface, and performs power-on reset on the plurality of integrated modules. The management unit may simultaneously perform power-on reset on the plurality of integrated modules, may sequentially perform power-on reset on each integrated module, or may sequentially perform power-on reset on some integrated modules in the plurality of integrated modules. This is not specifically limited herein.

The management unit may control a startup sequence of the plurality of integrated modules by performing power-on reset on the plurality of integrated modules, so that concurrent access of the plurality of integrated modules can be avoided.

S520: The management unit receives one or more read/write requests that are for a plurality of pieces of target data and sent by the plurality of integrated modules, and determines a plurality of target addresses corresponding to the plurality of pieces of target data, where the plurality of integrated modules are in one-to-one correspondence with the read/write requests for the plurality of pieces of target data, and the plurality of pieces of target data are in one-to-one correspondence with the plurality of target addresses.

In a possible implementation, the management unit determines, based on the read/write requests for the plurality of pieces of target data, the plurality of target addresses corresponding to the plurality of pieces of target data, where each of the plurality of pieces of target data may be a configuration file of the integrated module, firmware data of the integrated module, or the like. This is not specifically limited herein. The management unit determines, based on the plurality of pieces of target data, the plurality of target addresses corresponding to the plurality of pieces of target data. The target address of each piece of target data in the plurality of target addresses may include a starting address of the target data and a length of the target data, or include a starting address, an ending address, and the like of the target data. This is not specifically limited herein.

S530: The management unit determines a plurality of physical addresses in a storage device based on the plurality of target addresses, where the plurality of target addresses are in one-to-one correspondence with the plurality of physical addresses.

In a possible implementation, the management unit may perform address remapping, and determine the plurality of physical addresses in the storage device based on the plurality of target addresses. The physical addresses may include a physical starting address of the target data and the length of the target data, or include a physical starting address, a physical ending address, and the like of the target data. This is not specifically limited herein. For example, the management unit determines the physical starting addresses of the plurality of pieces of target data in the storage device based on the starting addresses of the target data in the plurality of pieces of target addresses, and because lengths of the plurality of pieces of target data remain unchanged, the plurality of physical addresses can be determined.

S540: The management unit reads or writes the plurality of pieces of target data into the storage device based on the plurality of physical addresses.

The management unit reads the plurality of pieces of target data from the storage device based on the plurality of physical addresses.

In a possible implementation, when the management unit sequentially receives the read requests that are for the plurality of pieces of target data and sent by the plurality of integrated modules, the management unit sequentially reads the plurality of pieces of target data from the storage device based on the plurality of physical addresses, and sequentially sends the plurality of pieces of target data to the plurality of corresponding integrated modules.

In another possible implementation, when the management unit simultaneously receives the write requests that are for the plurality of pieces of target data and sent by the plurality of integrated modules, the management unit reads the plurality of pieces of target data from the storage device based on the plurality of physical addresses, buffers the plurality of pieces of target data into a buffer, and sends the plurality of pieces of target data in parallel to the plurality of corresponding integrated modules.

The management unit writes the plurality of pieces of target data into the storage device based on the plurality of physical addresses.

In a possible implementation, when the management unit sequentially receives the write requests that are for the plurality of pieces of target data and sent by the plurality of integrated modules, the management unit sequentially writes the plurality of pieces of target data into the storage device based on the plurality of physical addresses.

In another possible implementation, when the management unit simultaneously receives the write requests that are for the plurality of pieces of target data and sent by the plurality of integrated modules, the management unit buffers the plurality of pieces of target data into the buffer, sequentially obtains one piece of target data in the buffer, and writes the target data into the corresponding physical address of the storage device. The management unit continuously repeats the foregoing process, and writes the plurality of pieces of target data into the storage device.

According to the storage device sharing method provided in this application, in a multi-integrated-module scenario, the management unit receives the read/write requests that are for the plurality of pieces of target data and sent by the plurality of integrated modules, and maps the target addresses of the plurality of pieces of target data to the plurality of different physical addresses in one storage device, to implement address remapping of the target data and implement sharing of one storage device by the plurality of integrated modules.

In conclusion, according to the storage device sharing method provided in this application, in the multi-integrated-module scenario, data of the plurality of integrated modules can be read or written in one storage device configured by the management unit, so that a quantity of storage devices can be greatly reduced in the multi-integrated-module scenario, and costs can be reduced.

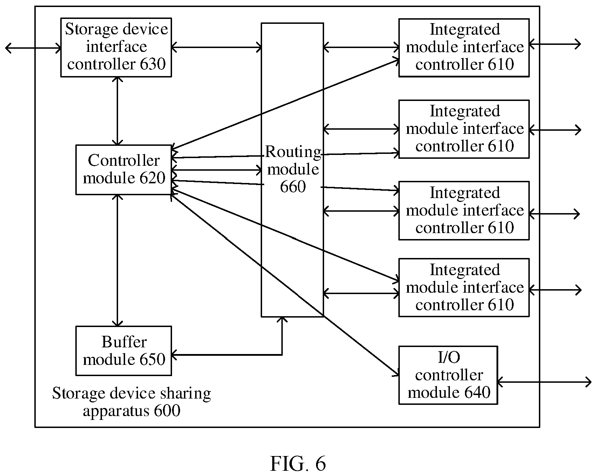

FIG. 6 is a schematic diagram of a structure of a storage device sharing apparatus according to this application. The apparatus may be applied to the management unit of the multi-integrated-module system shown in FIG. 3. The storage device sharing apparatus 600 includes: an integrated module interface controller 610, configured to receive one or more read/write requests that are for a plurality of pieces of target data and sent by a plurality of integrated modules, and determine a plurality of target addresses corresponding to the plurality of pieces of target data, where the plurality of integrated modules are in one-to-one correspondence with the read/write requests for the plurality of pieces of target data, and the plurality of pieces of target data are in one-to-one correspondence with the plurality of target addresses; a controller module 620, configured to determine a plurality of physical addresses in a storage device based on the plurality of target addresses, where the plurality of target addresses are in one-to-one correspondence with the plurality of physical addresses; a storage device interface controller 630, configured to read or write the plurality of pieces of target data in the storage device based on the plurality of physical addresses; an I/O controller module 640, configured to perform power-on reset on the plurality of integrated modules; a buffer module 650, configured to buffer the plurality of pieces of target data; and a routing module 660, configured to establish a plurality of communication connections between the plurality of integrated modules and the storage device that corresponds to the management unit, where the plurality of integrated modules are in one-to-one correspondence with the plurality of communication connections.

A plurality of integrated module interface controllers are configured to connect to the plurality of integrated modules. Each integrated module interface controller is configured to connect to the routing module and the controller module. The storage device interface controller is configured to connect to the storage device, and is connected to the routing module and the controller module. The controller module is configured to connect to all devices in the apparatus, and is configured to control working of all devices in the apparatus.

In a specific embodiment, when the integrated module interface controllers are a plurality of ASIC interface controllers and the storage device interface controller is a Flash interface controller, the controller module is configured to control the I/O controller module, and the I/O controller module is configured to simultaneously control a startup sequence of four ASICs connected to four ASIC interface controllers. Controlled by the I/O controller module, a first ASIC interface controller is first configured to receive a read request that is for a first piece of target data and sent by a first ASIC, and determine a first target address corresponding to the first piece of target data. Then, the routing module is configured to transmit the first target address to the controller module through a communication connection corresponding to the first ASIC interface controller. The controller module is configured to determine a first physical address based on the first target address, and send the first physical address to the Flash interface controller. The Flash interface controller is configured to access the first piece of target data in the Flash device based on the first physical address. When the first piece of target data is obtained, the Flash interface controller may send the first piece of target data to the routing module. The routing module sends the first piece of target data to the corresponding first ASIC interface controller through a corresponding communication connection. Then the first integrated module interface controller transmits the first piece of target data to the first ASIC.

Then, a second ASIC interface controller may be configured to receive a second piece of target data, and a write request that is for the second piece of target data and sent by a second ASIC, and determine a second target address of the second piece of target data. At the same time, a third ASIC interface controller may be configured to receive a third piece of target data, and a write request that is for the third piece of target data and sent by a third ASIC, and determine a third target address of the third piece of target data. The controller module may be configured to receive the write request for the second piece of target data, the second piece of target data, the second target address, the write request for the third piece of target data, the third piece of target data, and the third target address that are transmitted by the routing module. Because there is only one Flash interface controller, the controller module is first configured to store the write request for the third piece of target data, the third piece of target data, and the third target address in the buffer module, determine a second physical address based on the second target address, and the Flash interface controller writes the second piece of target data into the connected Flash device based on the second physical address. When the write request for the second piece of target data is completed, the controller module may be configured to obtain the write request for the third piece of target data, the third piece of target data, and the third target address from the buffer module, determine the third physical address based on the third target address, and the Flash interface controller writes the third piece of target data into the connected Flash device based on the third physical address.

In conclusion, according to the storage device sharing apparatus provided in this application, the integrated module interface controller, the controller module, the storage device interface controller, the I/O controller module, the routing module, and the buffer module cooperate with each other to receive, in a multi-integrated-module scenario, access requests that are for the plurality of pieces of target data and sent by the plurality of integrated modules, and map the target addresses of the plurality of pieces of target data to the different physical addresses of one storage device, to implement address remapping of the target data and implement sharing the storage device by the plurality of integrated modules, so that a quantity of storage devices in the multi-integrated-module scenario can be reduced, thereby reducing costs.

An embodiment of this application provides a chip. The chip may include the foregoing device or logic circuit. When the chip runs on a server, the server is enabled to perform the storage device sharing method in the foregoing method embodiment. During specific implementation, the chip may be a chip in which the management unit is located in the foregoing content.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A multi-integrated-module system, wherein the multi-integrated-module system comprises:
a storage device, configured to store or write a plurality of pieces of target data;
a plurality of integrated modules, configured to send one or more read/write requests for the plurality of pieces of target data, wherein the plurality of integrated modules are in one-to-one correspondence with the plurality of pieces of target data; and
a management unit, configured to connect to the storage device, and separately connect to the plurality of integrated modules, and configured to receive the read/write requests that are for the plurality of pieces of target data and sent by the plurality of integrated modules, determine a plurality of target addresses corresponding to the plurality of pieces of target data, wherein the plurality of pieces of target data are in one-to-one correspondence with the plurality of target addresses, determine a plurality of physical addresses in the storage device based on the plurality of target addresses, wherein the plurality of target addresses are in one-to-one correspondence with the plurality of physical addresses, and read or write the plurality of pieces of target data in the storage device based on the plurality of physical addresses.

2. The system according to claim 1, wherein before receiving the read/write requests that are for the plurality of pieces of target data and sent by the plurality of integrated modules, and determining a plurality of target addresses corresponding to the plurality of pieces of target data, the management unit is further configured to perform power-on reset on the plurality of integrated modules.

3. The system according to claim 1 or 2, wherein that the management unit is configured to receive access requests that are for the plurality of pieces of target data and sent by the plurality of integrated modules comprises:
the management unit is configured to receive, through a plurality of integrated module interfaces, the read/write requests that are for the plurality of pieces of target data and sent by the plurality of integrated modules, wherein the plurality of integrated module interfaces are in one-to-one correspondence with the plurality of integrated modules, and each integrated module interface in the plurality of integrated modules comprises a serial peripheral interface SPI or an inter-integrated circuit I2C interface.

4. The system according to any one of claims 1 to 3, wherein after reading the plurality of pieces of target data in the storage device based on the plurality of physical addresses, the management unit is specifically configured to:
send the plurality of pieces of target data to the plurality of integrated modules respectively corresponding to the plurality of pieces of target data; or
buffer the plurality of pieces of target data into a buffer, and send the plurality of pieces of target data in the buffer in parallel to the plurality of corresponding integrated modules.

5. A storage device sharing method, applied to a multi-integrated-module system, wherein the multi-integrated-module system comprises a plurality of integrated modules, a management unit, and a storage device, the plurality of integrated modules are separately connected to the management unit, the management unit is connected to the storage device, and the method comprises:
receiving, by the management unit, one or more read/write requests that are for a plurality of pieces of target data and sent by the plurality of integrated modules, and determining a plurality of target addresses corresponding to the plurality of pieces of target data, wherein the plurality of integrated modules are in one-to-one correspondence with the read/write requests for the plurality of pieces of target data, and the plurality of pieces of target data are in one-to-one correspondence with the plurality of target addresses;
determining, by the management unit, a plurality of physical addresses in the storage device based on the plurality of target addresses, wherein the plurality of target addresses are in one-to-one correspondence with the plurality of physical addresses; and
reading or writing, by the management unit, the plurality of pieces of target data in the storage device based on the plurality of physical addresses.

6. The method according to claim 5, wherein before the receiving one or more read/write requests that are for a plurality of pieces of target data and sent by the plurality of integrated modules, and determining a plurality of target addresses corresponding to the plurality of pieces of target data, the method further comprises:
performing, by the management unit, power-on reset on the plurality of integrated modules.

7. The method according to claim 5 or 6, wherein the sequentially receiving, by the management unit, access requests that are for a plurality of pieces of target data and sent by the plurality of integrated modules comprises:
receiving, by the management unit through a plurality of integrated module interfaces, the read/write requests that are for the plurality of pieces of target data and sent by the plurality of integrated modules, wherein the plurality of integrated module interfaces are in one-to-one correspondence with the plurality of integrated modules, and each integrated module interface in the plurality of integrated modules comprises a serial peripheral interface SPI or an inter-integrated circuit I2C interface.

8. The method according to any one of claims 5 to 7, wherein after the reading the plurality of pieces of target data in the storage device based on the plurality of physical addresses, the method further comprises:
sending, by the management unit, the plurality of pieces of target data to the plurality of integrated modules corresponding to the plurality of pieces of target data; or
buffering, by the management unit, the plurality of pieces of target data into a buffer, and sending the plurality of pieces of target data in the buffer in parallel to the plurality of corresponding integrated modules.
